# EUROPÄISCHE PATENTSCHRIFT

(11) **EP 2 463 123 B1**
(45) Veröffentlichungstag und Bekanntmachung des Hinweises auf die Patenterteilung: **23.04.2014**
(21) Anmeldenummer: 11187420.2
(22) Anmeldetag: 02.11.2011
(51) Int. Cl.: B60C 11/12, B60C 11/03

(54) **Fahrzeugluftreifen**
Pneumatic tyre for a vehicle
Pneu de véhicule

(30) Priorität: 07.12.2010 DE 102010061086
(43) Veröffentlichungstag der Anmeldung: 13.06.2012
(73) Patentinhaber: Continental Reifen Deutschland GmbH, 30165 Hannover (DE)
(72) Erfinder: Vermehr, Ulrich, 30163 Hannover (DE); Diensthuber, Franz, 30559 Hannover (DE)
(74) Vertreter: Finger, Karsten

(56) Entgegenhaltungen:
- EP-A1- 1 533 140
- DE-A1- 4 300 695
- DE-A1-102007 044 435

## Beschreibung

Die Erfindung betrifft einen Fahrzeugluftreifen in Radialbauart, insbesondere für den Einsatz unter winterlichen Fahrbedingungen, mit einem Laufstreifen, welcher schulterseitige Profilblockreihen mit durch Quernuten voneinander getrennten Schulterblöcken aufweist, wobei die schulterseitigen Profilblockreihen jeweils durch eine in Umfangsrichtung umlaufende Umfangsrille von einem zentralen, von Umfangsnuten freien Laufstreifenbereich getrennt sind, in welchem Profilblöcke/Profilpositive von Diagonalrillen gebildet sind, welche gemeinsam mit den Quernuten aus den schulterseitigen Profilblockreihen über die Laufstreifenbreite im Wesentlichen gepfeilt angeordnet sind, wobei die Diagonalrillen in der einen Laufstreifenhälfte gegenüber jenen in der anderen Laufstreifenhälfte in Umfangsrichtung versetzt sind, *mit ihrem einen Ende in die Umfangsrille der jeweiligen Laufstreifenhälfte münden* und jeweils geringfügig über den Reifenäquator *hinaus* in die jeweils andere Laufstreifenhälfte hineinverlaufen, und wobei je ein Schulterblock aus jeder Schulterblockreihe mit je einer benachbarten Quernut *mit* zwei Diagonalrillen - jeweils einer aus jeder Laufstreifenhälfte - *und* mitsamt den ihnen benachbart verlaufenden Profilpositiven je ein Pitch bilden, wobei die Pitches in zumindest zwei unterschiedlichen Umfangslängen vorgesehen sind und von zwei der Laufstreifenquerrichtung zugeordneten *und über die Laufstreifenbreite verlaufenden* Pitchgrenzen *begrenzt sind.*

Ein solcher Reifen wird von Dokument EP1533140 offenbart.

Es ist bekannt, laufrichtungsgebunden gestaltete Laufstreifenprofile mit gepfeilt angeordneten Nuten und Rillen bezüglich des Reifenäquators spiegelsymmetrisch anzuordnen. Diese Maßnahme ist für ein gutes Wasserdrainagevermögen und damit für das Aquaplaningverhalten des Reifens von Vorteil. Das gleichzeitige Einlaufen der spiegelsymmetrisch verlaufenden Nuten/Rillen in der Laufstreifenmitte benachteiligt solche Laufstreifenprofile jedoch im Abrollgeräusch. Des weiteren ist es bekannt, Laufstreifen mit über die Laufstreifenbreite gepfeilt angeordneten Nuten bzw. Rillen derart auszuführen, dass die Nuten/Rillen, die in der einen Laufstreifenhälfte verlaufen, gegenüber jenen, die in der anderen Laufstreifenhälfte verlaufen, in Umfangsrichtung versetzt sind. Es gibt nun Laufstreifenprofile mit zur Laufstreifenmitte pfeilartig verlaufende Rillen, welche beim Reifenäquator nahezu in Umfangsrichtung orientiert sind. Bei anderen bekannten Laufstreifenprofilen mit gepfeilter Anordnung von Rillen verlaufen die Rillen jeweils über den Reifenäquator etwas hinaus und daher in die andere Laufstreifenhälfte hinein. Bei der üblichen Auslegung und Konstruktion von Pitches in Laufstreifen ist es bei solchen Laufstreifenprofilen erforderlich, die Rillen in den beiden Laufstreifenhälften je nach Pitch unterschiedlich lang auszuführen. Dadurch ergeben sich innerhalb eines Pitches ungleich große Profilpositive in den Laufstreifenhälften. Diese Ungleichmäßigkeit in der Größe und Ausführung der Profilpositive bewirkt beim Aufpumpen des Reifens einen unterschiedlichen Gegendruck durch die Profilpositive, sodass ein Wellen des unterhalb des Laufstreifen befindliches Gürtelverbandes auftreten kann und sich Unterschiede in der Profilpositivhöhe einstellen. Solche Unregelmäßigkeiten haben Geräusch- und Abriebsprobleme zur Folge.

Der Erfindung liegt die Aufgabe zugrunde, ein Laufstreifenprofil der eingangs genannten Art konstruktiv derart auszulegen, dass der für das subjektive Geräusch wichtige Versatz der Diagonalrillen eine für das Aquaplaningverhalten günstige Positionierung der Diagonalrillen in der Laufstreifenmitte ermöglicht, ohne dass die geschilderten Nachteile auftreten.

Gelöst wird die gestellte Aufgabe erfindungsgemäß dadurch, dass in jedem Pitch *die in der einen Laufstreifenhälfte verlaufende Diagonalrille innerhalb des Pitches entlang der einen Pitchgrenze und die in der anderen Laufstreifenhälfte verlaufende Diagonalrille innerhalb des Pitches entlang der anderen Pitchgrenze verläuft,* und dass die beiden zu einem Pitch gehörenden Diagonalrillen übereinstimmende Breiten aufweisen und unter gleich großen Winkeln zum Reifenäquator verlaufen. Durch die erfindungsgemäßen Maßnahmen wird mit in Umfangsrichtung versetzten Diagonalrillen ein bezüglich des Reifenäquators "spiegelsymmetrisch versetztes" Laufstreifenprofil geschaffen, mit Pitches unterschiedlicher Umfangslänge, wobei in jedem Pitch einer bestimmten Umfangslänge in den beiden Laufstreifenhälften die Positiv- und Negativflächen übereinstimmen. Erfindungsgemäße Laufstreifenprofile sind daher geräuscharm und gewährleisten gleichzeitig ein sehr gutes Wasserdrainagevermögen. Da die an beiden Seiten des Reifenäquators pro Pitch befindlichen Profilpositiven gleich steif sind, treten beim Aufpumpen des Reifens keine Blockabsenkungen auf.

Für das Wasserableitvermögen des Laufstreifenprofils von der Profilmitte zu den Laufstreifenrändern ist es von Vorteil, wenn die Breite der Diagonalrillen von innen nach außen kontinuierlich größer wird. Zusätzlich kann auch die Breite der Quernuten in den schulterseitigen Profilblockreihen zu den Laufstreifenrändern kontinuierlich größer werden.

Eine weitere Optimierung des Wasserableitvermögens lässt sich dadurch erzielen, dass die Diagonalrillen zwei unter einem stumpfen Winkel zueinander verlaufende Rillenabschnitte aufweisen, wobei der über den Reifenäquator geringfügig hinausverlaufende Abschnitt unter einem Winkel von 20° bis 40° zum Reifenäquator verläuft.

Weitere Merkmale, Vorteile und Einzelheiten der Erfindung werden nun anhand der Zeichnung, die ein Ausführungsbeispiel darstellt, näher beschrieben. Dabei zeigen,

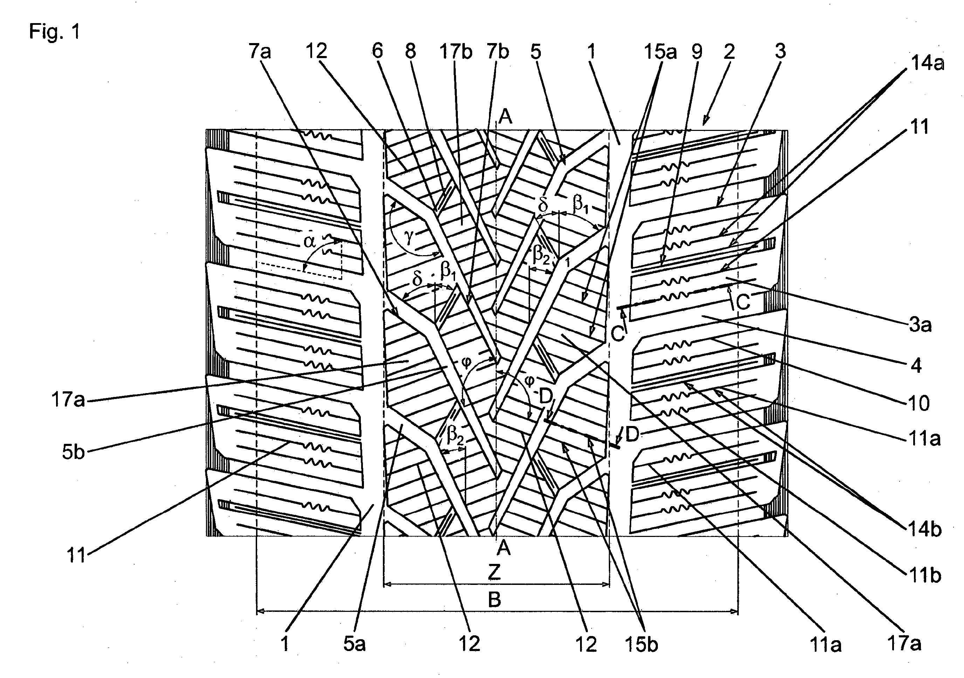

Fig. 1 eine Draufsicht auf einen Abschnitt der Abwicklung eines Laufstreifenprofils eines Fahrzeugluftreifens mit einer Ausführungsvariante der Erfindung und
Fig. 2 eine Ansicht von drei unterschiedlich langen Pitches des Laufstreifenprofils aus Fig. 1.

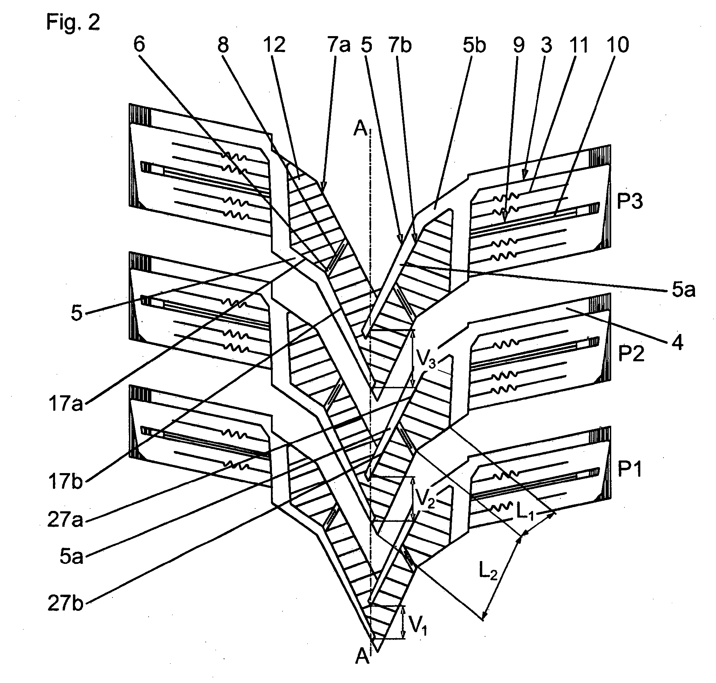

Der in der Figur dargestellte Laufstreifen ist für einen Fahrzeugluftreifen für Personenkraftwagen vorgesehen und für einen Einsatz unter winterlichen Fahrbedingungen besonders geeignet. Mit A-A ist der Reifenäquator, mit B die Breite des Boden berührenden Teils des Laufstreifen (unter Nenndruck und Nennlast gemäß E.T.R.T.O Standards) bezeichnet. Der Laufstreifen weist ein laufrichtungsgebunden ausgeführtes Laufstreifenprofil mit in den beiden Laufstreifenhälften übereinstimmend ausgeführten Profilstrukturen auf, wobei die in der einen Laufstreifenhälfte vorgesehenen Profilstrukturen gegenüber jenen, die in der anderen Laufstreifenhälfte vorgesehen sind, in Umfangsrichtung geringfügig versetzt sind. Die konstruktive Ausgestaltung der Profilstrukturen zur Erzielung des Versatzes wird weiter unten anhand der Fig. 2 näher beschrieben.

Das Laufstreifenprofil weist einen zentralen Profilbereich Z auf, auf dessen Ausgestaltung noch eingegangen wird und welcher zwischen 45 % und 55 % der Laufstreifenbreite B einnimmt. Der zentrale Bereich Z ist jeweils durch eine breite, in Umfangsrichtung umlaufende Umfangsrille 1 von je einer Schulterblockreihe 2 getrennt. Die Profilblöcke 3 in jeder Schulterblockreihe 2 sind in Umfangsrichtung voneinander durch Quernuten 4 getrennt, deren Breite zu den Laufstreifenrändern größer wird, welche ferner bei der gezeigten Ausführungsform gerade verlaufen und mit der Umfangsrichtung einen Winkel α einschließen, welcher insbesondere zwischen 65° und 85° gewählt wird, wobei in Folge der laufrichtungsgebundenen Ausführung des Laufstreifens die Quernuten 4 in der einen Schulterblockreihe 2 gegenüber den Quernuten 4 in der zweiten Schulterblockreihe 2 gegensinnig geneigt sind. Die Neigung ist ferner derart, dass die laufstreifeninnenseitig gelegenen Enden der Quernuten 4 beim Abrollen des Reifens zuerst in die Kontaktfläche mit dem Untergrund einlaufen. Im zentralen Bereich Z des Laufstreifens, sind als Hauptrillen Diagonalrillen 5 vorgesehen. Jede Diagonalrille 5 verläuft jenseits der jeweiligen Umfangsrille 1 etwa in Verlängerung einer Quernut 4 aus einer Schulterblockreihe 2 in Richtung Reifenäquator A-A, und geringfügig über den Reifenäquator A-A hinaus. Die in der einen Laufstreifenhälfte verlaufenden Diagonalrillen 5 sind daher gegenüber jenen, die in der anderen Laufstreifenhälfte verlaufen, analog zu den Quernuten 4 gegensinnig geneigt, sodass sich insgesamt eine gepfeilte Anordnung der Querrillen 4 und der Diagonalrillen 5 ergibt.

Jede Diagonalrille 5 weist zwei unter einem stumpfen Winkel γ zueinander verlaufende Rillenabschnitte 5a, 5b auf, wobei γ in der Größenordnung von 140° bis 160° beträgt. Die an die Umfangsrillen 1 anschließenden Rillenabschnitte 5a verlaufen unter einem Winkel β₁ zur Umfangsrichtung, welcher zwischen 45° und 65° beträgt, die geringfügig über den Reifenäquator A-A verlaufenden Rillenabschnitte 5b schließen einen spitzen Winkel β₂, welcher kleiner ist als β₁ und in der Größenordnung von 20° bis 40° beträgt, mit der Umfangsrichtung bzw. dem Reifenäquator A-A ein. An ihren laufstreifeninnenseitigen Enden weisen die Diagonalrillen 5 ihre geringste Breite auf, wobei ihre Breite von diesen Enden ausgehend bis zur jeweiligen Umfangsrille 1 kontinuierlich größer wird. Zusätzliche Rillen 6 gliedern den zentralen Bereich in Profilblöcke 7a und profilblockartige Profilelemente 7b. Die zusätzlichen Rillen 6 verbinden jeweils zwei einander benachbart verlaufende Diagonalrillen 5 und verlaufen jeweils vom vorspringenden Knick einer Diagonalrille 5 zum Rillenabschnitt 5b der benachbarten Diagonalrille 5 unter einem Winkel δ von 20° bis 40° und gegensinnig zu den Diagonalrillen 5. Die Rillen 6 sind schmäler als die Diagonalrillen 5, ihre Tiefe ist geringer als die Tiefe der Umfangsrillen 1 bzw. der Diagonalrillen 5. Am Rillengrund der Rillen 6 kann ein schmaler Einschnitt 8 vorgesehen sein, welcher in einer Breite von 0,4 mm bis 1,0 mm ausgeführt ist und bis auf die vorgesehene Profiltiefe - dies ist die Tiefe der Umfangsrillen 1 - reichen kann.

Die schulterseitig angeordneten Profilblöcke 3 sind in ihrem mittleren Bereich durch in konstanter Breite ausgeführte zusätzliche Querrillen 9 zweigeteilt, welche parallel zu den Quernuten 4 verlaufen und in die Umfangrille 1 einmünden. Auch die zusätzlichen Querrillen 9 weisen eine geringere Tiefe auf als die Umfangsrillen 1 und können mittig mit einem schmalen, etwa 0,4 mm bis 0,6 mm breiten Einschnitt 10 versehen sein, welcher sich jeweils bevorzugt über die gesamte Länge der Querrille 9 erstreckt und eine Tiefe von 1 mm bis 3 mm aufweist.

Sämtliche Profilpositive sind jeweils mit einer Anzahl von Einschnitten 11, 12 versehen, deren Breite zwischen 0,4 mm und 0,6 mm beträgt. In den Schulterblöcken 3 ist zumindest je ein Einschnitt 11 im Schulterblockteil zwischen der zusätzlichen Querrille 9 und der Quernut 4 vorgesehen, je nach Umfangslänge der Schulterblöcke 3 sind in den Schulterblockteilen auch zwei Einschnitte 11 vorgesehen. Die Einschnitte 11 erstrecken sich parallel zu den Quernuten 4 und weisen zwei in Draufsicht gerade verlaufende Einschnittabschnitte 11a und eine zwischen diesen verlaufenden mittleren Abschnitt 11b auf, welcher in Draufsicht eine Wellen- bzw. Zickzackform aufweist. Die wellenförmigen Abschnitte 11b tragen dazu bei, dass sich die Profilblöcke 3 in den Schulterblockreihen 2 bei Querkräften versteifen können.

Im zentralen Bereich Z des Laufstreifens sind in Draufsicht gerade verlaufende Einschnitte 12 angeordnet. Die Einschnitte 12 können in Laufstreifenquerrichtung verlaufen oder es sind die auf der eine Seite des Reifenäquators A-A verlaufenden Einschnitte 12 gegenüber jenen, die an der anderen Seite des Reifenäquators A-A verlaufen, gegensinnig geneigt und auch jeweils gegensinnig zum Verlauf der dort angeordneten Diagonalrillen 5 geneigt. Der Neigungswinkel ϕ der Einschnitte 12 zur Umfangsrichtung (Reifenäquator A-A) beträgt zwischen 90° und 120°. Beim Reifenäquator A-A verlaufen einige Einschnitte 12 aus der einen Laufstreifenhälfte geringfügig über den Reifenäquator A-A hinaus und enden bei der nächsten Diagonalrille 5. Pro Profilblock 7a bzw. blockartigem Profilelement 7b sind zwischen 5 und 7 Einschnitte 12 vorgesehen, deren gegenseitiger Abstand etwa 5 mm bis 6,5 mm beträgt. Die geraden und zumindest im Wesentlichen in Laufstreifenrichtung verlaufenden Einschnitte 12 im zentralen Bereich Z des Laufstreifens unterstützen eine möglichst optimale Kraftübertragung auf Schnee. Beim Wirken von Umfangskräften können sich diese geraden Einschnitte 12 sehr gut öffnen und mit Schnee befüllen, sodass die derart verstärkte Schnee-Schnee-Reibung das gesamte Griffpotential des Laufstreifens bzw. Reifens auf schneeigem Untergrund deutlich erhöht.

Die Einschnitte 11, 12 können ferner in bekannter Weise Abschnitte mit unterschiedlichen Tiefen aufweisen.

Zur Erzielung eines unauffälligen und möglichst geringen Abrollgeräusches ist das Laufstreifenprofil geräuschoptimiert ausgelegt. Dazu ist das Laufstreifenprofil in sogenannte Pitches gegliedert, bei der dargestellten Ausführungsvariante sind drei Pitches P1, P2 und P3 mit unterschiedlichen Umfangslängen vorgesehen. Das Pitch P1 weist die geringste Umfangslänge auf, das Pitch P3 die größte Umfangslänge, P2 weist eine Umfangslänge auf, die zwischen der längsten und der kürzesten Umfangslänge liegt. Wie bekannt werden die Pitches P1, P2, P3 über den Reifenumfang gemäß einer sogenannten Pitchfolge angeordnet, wobei die Gesamtanzahl der Pitches über den Reifenumfang in einem PKW-Winterreifen in der Größenordnung von 65 bis 90 beträgt. In einer Pitchfolge können an manchen Stellen des Reifenumfangs zwei oder mehr Pitches gleicher Länge hintereinander angeordnet sein.

Zu jedem Pitch P1, P2, P3 gehört jeweils ein Profilblock 3 aus jeder Schulterblockreihe 2 mitsamt der, bezogen auf die Abrollrichtung des Reifens bei Vorwärtsfahrt, an die auslaufende Profilblockkante 3a anschließenden Quernut 4. Die Umfangserstreckung der Schulterblöcke 3 und der Quernuten 4 ist in einem Pitch P1 mit der kleinsten Umfangslänge am geringsten, in einem Pitch P3 mit der größten Umfangslänge am größten. Je nach Umfangslänge sind daher auch in den Profilblöcken 3 zwei, drei oder vier der bereits beschriebenen Einschnitte 11 vorhanden. Aus dem zentralen Bereich Z gehören zu jedem Pitch P1, P2, P3 jeweils zwei Diagonalrillen 5 sowie zwei Profilblöcke 7a und zwei blockartige Profilpositive 7b. Die Diagonalrille 5 in der einen Laufstreifenhälfte befindet sich , bezogen auf die Abrollrichtung, an den auslaufenden Kanten 17a, 17b des Profilblockes 7a und des blockartigen Profilpositivs 7b. In der zweiten Laufstreifenhälfte befindet sich die zu jedem Pitch P1, P2 und P3 gehörenden zweiten Diagonalrillen 5 an den einlaufenden Kanten 27a, 27b des Profilblocks 7a und des blockartigen Profilpositivs 7b. Die Diagonalrillen 5 in jedem Pitch P1, P2, P3 sind jeweils gleich ausgeführt und in Umfangsrichtung gegeneinander versetzt, wobei für den jeweiligen Versatz V₁, V₂, V₃, welcher entlang des Reifenäquators ermittelt wird, gilt, dass V₁ < V₂ < V₃. Auch im zentralen Bereich Z des Laufstreifens ist die Breite der Diagonalrillen 5 auf die Umfangserstreckung der Profilpositive - Profilblöcke 7a und blockartige Profilpositive 7b - abgestimmt, sodass im Pitch P1 die geringste Umfangserstreckung bzw. Diagonalrillenbreite vorliegt und im Pitch 3 die breitesten Diagonalrillen 5 und die größte Umfangserstreckung der Profilblöcke 7a und der blockartigen Profilpositive 7b. Die Winkel α, β₁, β₂, δ und γ sind in sämtlichen Pitches P1, P2, P3 gleich groß, und die Rillenabschnitte 5a und 5b weisen in sämtlichen Pitches P1, P2, P3 im Wesentlichen übereinstimmende Längen L1, L2 auf, wobei die Längen L1, L2 jeweils an den einlaufenden Kanten 27a, 27b ermittelt werden.

Das Laufstreifenprofil gemäß der Erfindung ist daher im Wesentlichen ein bezüglich des Reifenäquators A-A "spiegelsymmetrisch versetztes" Laufstreifenprofil mit einem, bedingt durch die Anordnung der Diagonalrillen 5, sehr gutem Wasserdrainagevermögen. Durch die besondere Anordnung der Diagonalrillen 5 in jedem Pitch P1, P2, P3, die im Wesentlichen übereinstimmenden Längen L1, L2 sowie die übereinstimmenden Winkel α, β₁, β₂, δ und γ sind in jedem Pitch P1, P2, P3 die auf der einen Seite des Reifenäquators A-A befindlichen Profilpositivflächen gleich groß zu jenen, die sich auf der anderen Seite des Reifenäquators befinden. Über den gesamten Reifenumfang betrachtet ist daher in der linken Laufstreifenhälfte gleich viel "Profilpositiv" vorhanden wie in der rechten Laufstreifenhälfte, unabhängig davon, ob die Anzahl von Pitches über den Laufstreifenumfang gerade oder ungerade ist. Dies ist mit dem Vorteil verbunden, dass sich beim Aufpumpen des Reifens der radial innerhalb des Laufstreifens befindliche Gürtelverband gleichmäßig dehnt, wodurch sich eine gleichmäßige torusförmige Außenfläche des Reifens im Laufstreifenbereich einstellt.

Die Erfindung ist auf das dargestellte Laufstreifenprofil nicht eingeschränkt. In erfindungsgemäß ausgeführten Profilen können lediglich zwei Pitches oder mehr als drei Pitches mit unterschiedlichen Umfangslängen vorgesehen sein.

### Bezugszeichenliste

- 1: ................ Umfangsrille
- 2: ................ Schulterblockreihe
- 3: ................ Profilblock
- 3a: .................umlaufende Kante
- 4: ............... Quernuten
- 5: ................ Diagonalrille
- 5a: .................Rillenabschnitt
- 5b: .................Rillenabschnitt
- 6: ................ zusätzliche Rille
- 7a: .................Profilblock
- 7b: .................blockartiges Profilpositiv
- 8: ...................Einschnitt
- 9: ...................zusätzliche Querrille
- 10: ............... Einschnitt
- 11: ............... Einschnitt
- 11a: ............... Einschnittabschnitt
- 11b: ...............Einschnittabschnitt
- 12: ............... Einschnitt
- 17a: ............... auslaufende Kante
- 17b: ............... auslaufende Kante
- 27a: ...............einlaufende Kante
- 27b: ...............einlaufende Kante
- α: ................... Winkel
- β₁: .................Winkel
- β₂: ................. Winkel
- γ: ................... Winkel
- δ: ................... Winkel
- ϕ: .................. Winkel
- A-A: .............. Reifenäquator
- B: ..................Breite
- L1: ................Länge
- L2: ................Länge
- Z: ..................zentraler Bereich
- P1: .................Pitch
- P2: .................Pitch
- P3: .................Pitch
- V₁: ................. Versatz
- V₂: ................. Versatz
- V₃: ................. Versatz

## Patentansprüche

1. Fahrzeugluftreifen in Radialbauart, insbesondere für den Einsatz unter winterlichen Fahrbedingungen, mit einem Laufstreifen, welcher schulterseitige Profilblockreihen mit durch Quernuten (4) voneinander getrennten Schulterblöcken aufweist, wobei die schulterseitigen Profilblockreihen jeweils durch eine in Umfangsrichtung umlaufende Umfangsrille (1) von einem zentralen, von Umfangsnuten freien Laufstreifenbereich getrennt sind, in welchem Profilblöcke/Profilpositive (7a, 7b) von Diagonalrillen (5) gebildet sind, welche gemeinsam mit den Quernuten (4) aus den schulterseitigen Profilblockreihen über die Laufstreifenbreite im Wesentlichen gepfeilt angeordnet sind, wobei die Diagonalrillen (5) in der einen Laufstreifenhälfte gegenüber jenen in der anderen Laufstreifenhälfte in Umfangsrichtung versetzt sind, *mit ihrem einen Ende in die Umfangsrille (1) der jeweiligen Laufstreifenhälfte münden* und jeweils geringfügig über den Reifenäquator (A-A) *hinaus* in die jeweils andere Laufstreifenhälfte hineinverlaufen, und wobei je ein Schulterblock aus jeder Schulterblockreihe mit je einer benachbarten Quernut (4), mit zwei Diagonalrillen (5) - jeweils einer aus jeder Laufstreifenhälfte - *und* mitsamt den ihnen benachbart verlaufenden Profilpositiven (7a, 7b) je ein Pitch (P1, P2, P3) bilden, wobei die Pitches (P1, P2, P3) in zumindest zwei unterschiedlichen Umfangslängen vorgesehen sind und von zwei der Laufstreifenquerrichtung zugeordneten *und über die Laufstreifenbreite verlaufenden* Pitchgrenzen *begrenzt sind,*
**dadurch gekennzeichnet,**
**dass** in jedem Pitch (P1, P2, P3) *die in der einen Laufstreifenhälfte verlaufende Diagonalrille (5) innerhalb des Pitches (P1, P2, P3) entlang der einen Pitchgrenze und die in der anderen Laufstreifenhälfte verlaufende Diagonalrille (5) innerhalb des Pitches (P1, P2, P3) entlang der anderen Pitchgrenze verläuft,* und dass die beiden zu einem Pitch (P1, P2, P3) gehörenden Diagonalrillen (5) übereinstimmende Breiten aufweisen und unter gleich großen Winkeln zum Reifenäquator (A-A) verlaufen.

2. Fahrzeugluftreifen nach Anspruch 1, **dadurch gekennzeichnet, dass** die Breite der Diagonalrillen (5) nach außen kontinuierlich größer wird.

3. Fahrzeugluftreifen nach Anspruch 1, **dadurch gekennzeichnet, dass** die Diagonalrillen (5) zwei unter einem stumpfen Winkel zueinander verlaufende Rillenabschnitte (5a, 5b) aufweisen, wobei der über den Reifenäquator (A-A) geringfügig hinaus verlaufende Abschnitt (5a) unter einem Winkel (β₂) von 20° bis 40° zum Reifenäquator (A-A) verläuft.

## Claims

1. Pneumatic vehicle tyre of radial design, in particular for use in winter driving conditions, having a tread strip which has shoulder-side profile block rows with shoulder blocks which are separated from one another by transverse grooves (4), the shoulder-side profile block rows being separated in each case by a circumferential groove (1) which runs around in the circumferential direction from a central tread strip region which is free of circumferential grooves, in which tread strip region profile blocks/profile positives (7a, 7b) are formed by diagonal grooves (5) which, together with the transverse grooves (4) from the shoulder-side profile block rows, are arranged substantially in a V-shape over the tread strip width, the diagonal grooves (5) in one tread strip half being offset in the circumferential direction with respect to those in the other tread strip half, opening with their one end into the circumferential groove (1) of the respective tread strip half and in each case running slightly beyond the equator of the tyre (A-A) into the respective other tread strip half, and in each case one shoulder block from each shoulder block row forming in each case one pitch (P1, P2, P3) with in each case one adjacent transverse groove (4), with two diagonal grooves (5) (in each case one from each tread strip half) and including the profile positives (7a, 7b) which run adjacently with respect to them, the pitches (P1, P2, P3) being provided in at least two different circumferential lengths and being delimited by two pitch boundaries which are assigned to the tread strip transverse direction and run over the tread strip width, **characterized in that**, in every pitch (P1, P2, P3), that diagonal groove (5) within the pitch (P1, P2, P3) which runs in one tread strip half runs along one pitch boundary and that diagonal groove (5) within the pitch (P1, P2, P3) which runs in the other tread strip half runs along the other pitch boundary, and **in that** the two diagonal grooves (5) which belong to a pitch (P1, P2, P3) have coinciding widths and run at equally large angles with respect to the equator of the tyre (A-A).

2. Pneumatic vehicle tyre according to Claim 1, **characterized in that** the width of the diagonal grooves (5) becomes continuously larger to the outside.

3. Pneumatic vehicle tyre according to Claim 1, **characterized in that** the diagonal grooves (5) have two groove sections (5a, 5b) which run at an obtuse angle with respect to one another, the section (5a) which runs slightly beyond the equator of the tyre (A-A) running at an angle (β₂) of from 20° to 40° with respect to the equator of the tyre (A-A).

## Revendications

1. Pneumatique de véhicule de construction radiale, en particulier pour l'utilisation dans des conditions de conduite hivernales, comprenant une bande de roulement qui présente des rangées de blocs profilés du côté de l'épaulement avec des blocs d'épaulement séparés les uns des autres par des rainures transversales (4), les rangées de blocs profilés du côté de l'épaulement étant séparées à chaque fois par une gorge périphérique (1) s'étendant sur la périphérie dans la direction périphérique d'une région de bande de roulement centrale exempte de rainures périphériques, dans laquelle sont formés des blocs profilés/des profilés positifs (7a, 7b) de gorges diagonales (5) qui sont disposées essentiellement en chevrons conjointement avec les rainures transversales (4) provenant des rangées de blocs profilés du côté de l'épaulement sur la largeur de la bande de roulement, les gorges diagonales (5) dans une moitié de la bande de roulement étant décalées par rapport à celles dans l'autre moitié de la bande de roulement dans la direction périphérique, débouchant avec l'une de leurs extrémités dans la gorge périphérique (1) de la moitié respective de la bande de roulement et s'étendant à chaque fois légèrement au-delà de l'équateur du pneu (A-A) dans l'autre moitié respective de la bande de roulement, et à chaque fois un bloc d'épaulement de chaque fois rangée de blocs d'épaulement formant, avec à chaque fois une rainure transversale adjacente (4), avec deux gorges diagonales (5) - à chaque fois une de chaque moitié de la bande de roulement - et conjointement avec les profilés positifs (7a, 7b) s'étendant à proximité de celles-ci, à chaque fois un pas (P1, P2, P3), les pas (P1, P2, P3) étant prévus dans au moins deux longueurs périphériques différentes et étant limités par deux limites de pas associées à la direction transversale de la bande de roulement et s'étendant sur la largeur de la bande de roulement,
**caractérisé en ce que** dans chaque pas (P1, P2, P3) la gorge diagonale (5) s'étendant dans l'une des moitiés de la bande de roulement s'etend à l'intérieur du pas (P1, P2, P3) le long de l'une des limites de pas et la gorge diagonale (5) s'étendant dans l'autre moitié de la bande de roulement s'étend à l'intérieur du pas (P1, P2, P3) le long de l'autre limite de pas, et **en ce que** les deux gorges diagonales (5) appartenant à un pas (P1, P2, P3) présentent des largeurs correspondantes et s'étendent suivant des angles égaux par rapport à l'équateur du pneu (A-A).

2. Pneumatique de véhicule selon la revendication 1, **caractérisé en ce que** la largeur des gorges diagonales (5) augmente en continu vers l'extérieur.

3. Pneumatique de véhicule selon la revendication 1, **caractérisé en ce que** les gorges diagonales (5) présentent deux portions de rainure s'étendant suivant un angle obtus l'une par rapport à l'autre (5a, 5b), la portion (5a) s'étendant légèrement au-delà de l'équateur du pneu (A-A) s'étendant suivant un angle (β₂) de 20° à 40° par rapport à l'équateur du pneu (A-A).
